# EUROPÄISCHE PATENTSCHRIFT

(11) **EP 2 271 907 B1**
(45) Veröffentlichungstag und Bekanntmachung des Hinweises auf die Patenterteilung: **15.04.2015**
(21) Anmeldenummer: 09737909.3
(22) Anmeldetag: 16.01.2009
(51) Int. Cl.: G01M 3/24, G01F 1/66

(54) **VERFAHREN ZUR ÜBERWACHUNG UND/ODER ORTUNG VON FLÜSSIGKEITSVERLUSTEN IN EINEM ROHRLEITUNGSNETZ**
METHOD FOR MONITORING AND/OR LOCATING FLUID LOSSES IN A PIPE NETWORK
PROCÉDÉ DE CONTRÔLE ET/OU DE LOCALISATION DE FUITES DE FLUIDE DANS UN RÉSEAU DE TUYAUTERIE

(30) Priorität: 02.05.2008 DE 102008021929
(43) Veröffentlichungstag der Anmeldung: 12.01.2011
(73) Patentinhaber: RBS Wave GmbH, 70173 Stuttgart (DE)
(72) Erfinder: KOBER, Erwin, 70192 Stuttgart (DE)
(74) Vertreter: Meyer-Dulheuer, Karl-Hermann
(86) Internationale Anmeldenummer: PCT/EP2009/050467
(87) Internationale Veröffentlichungsnummer: WO 2009/132865

(56) Entgegenhaltungen:
- EP-A- 0 009 263
- DE-A1- 10 329 909
- DE-A1- 19 528 287
- DE-A1- 19 819 258
- US-A- 3 869 915
- US-A- 4 930 358
- US-A- 5 463 905

## Beschreibung

Die Erfindung betrifft ein Verfahren zur Überwachung und/oder Ortung von Wasserverlusten in einem Wasserrohrleitungsnetz mit mehreren Ganglinien, welches insbesondere zum Einsatz in Verteilnetzen der Trinkwasserversorgung geeignet ist.

Durch Rohrbrüche oder undichte Abschnitte in Flüssigkeitsleitungen, insbesondere Wasserleitungen, oder im Bereich der Endverbraucher können erhebliche Verluste auftreten. Da die Rohrleitungen der Wasserversorgungsnetze unterirdisch verlegt sind, können die Leckverluste nicht ohne Weiteres sofort identifiziert werden.

Aus der EP A0009263 sind ein Verfahren zur Leckortung in vermaschten Leitungsnetzen sowie ein dabei verwendbarer Messschacht beschrieben. Dabei werden Kontrollstellen aufgebaut, an denen die Durchfließeigenschaften gleichzeitig und jeweils über eine bestimmte kurze Zeit für das ganze Leitungssystem regelmäßig und gleichzeitig erfasst werden können. An allen Kontrollstellen ist ein eigens dafür vorgesehener Kontrollschacht herzustellen, wobei dadurch die bestehenden Leitungen unterbrochen werden müssen, um Schieber, Messeinrichtungen oder Wasserzähler einsetzen zu können. Eine nachträgliche Ausstattung eines Wasserversorgungssystems mit einer solchen Einrichtung ist somit nicht möglich.

Die DE 19819258 C2 beschreibt ein Verfahren zur Durchführung von Messungen für die Feststellung von Wasserverlusten und die Ortung der Leckstellen in Wasserversorgungssystemen unter Einsatz von Messsonden, die in regelmäßigen oder unregelmäßigen Abständen oder ständig eine Messung des Durchflusses, des Druckes und des Fließgeräusches an Messstellen durchführen. Dabei erfolgt die Analyse mittels eines Auswertegerätes auf der Basis eines Null-Verbrauchs und von Daten bezüglich des Wasserdrucks, des Fließgeräusches sowie der Durchflussmenge und der Durchflussrichtung zur Ortung einer Leckstelle. Die Messelemente der dabei verwendeten Messsonde sind in eine hülsenartige Gewindespindel eingesetzt, wobei diese Gewindespindel in eine

Anbohrstelle eingedreht oder eindrehbar ist. Das Dokument DE 103 29 909 gibt ein weiteres Beipiel eines Verfahrens zur Überwachung des Wasserverbrauchs im einem Wasserrohrleistungsnetz.

Die bekannten Verfahrens bzw. Systeme haben die Nachteile, dass Bohrungen oder Schnitte in die Rohrleitungen erforderlich sind, eine Querschnittsverengung an den Einbaustellen auftritt und eine verschleiß- und wartungsfreie Messung nicht oder nur eingeschränkt möglich ist.

Die Aufgabe der vorliegenden Erfindung bestand somit darin, ein Verfahren bereitzustellen, das eine effiziente Überwachung eines Rohrleitungsnetzes ermöglicht, wobei eine zuverlässige und zeitnahe Detektion von Leckstellen, eine einfache Installation unter Betriebsbedingungen, eine zentrale Auswertung der Daten sowie eine nicht invasive Installation an Rohrleitungen unabhängig vom Rohrmaterial ermöglicht.

Die Aufgabe wurde durch ein Verfahren zur Überwachung und/oder Ortung von Wasserverlusten in einem Wasserrohrleitungsnetz mit mehreren Ganglinien gelöst, wobei das Verfahren mindestens folgende Schritte umfasst:
- Positionierung von Messeinheiten an ausgewählten Stellen des Rohrleitungsnetzes, wobei eine Messeinheit jeweils aus zwei gleichzeitig als Sender und Empfänger arbeitenden Sensoren besteht, welche entlang der Rohrachse auf der Außenseite, vorzugsweise auf Kämpferhöhe, eines Rohres angebracht sind,
- Messung der Strömungsgeschwindigkeit der Flüssigkeit im Rohr mit Hilfe des Ultraschallmessverfahrens, wobei ein erster Ultraschallimpuls durch die Flüssigkeit in Strömungsrichtung sowie ein zweiter Ultraschallimpuls entgegen der Strömungsrichtung gesendet wird, die Sensoren abwechselnd als Sender und Empfänger arbeiten und die Strömungsgeschwindigkeit aus der Laufzeitdifferenz Δt der Schallsignale in Strömungsrichtung und der Schallsignale entgegen der Strömungsrichtung bestimmt wird,

- Übertragung der Messdaten an eine Datenbank einer zentralen Rechnereinheit mit Hilfe eines an die jeweilige Messeinheit angeschlossenen Datenübertragungsmoduls und,
- Auswertung der Messdaten in der zentralen Rechnereinheit, indem die Messdaten der Ganglinien mit dem charakteristischen Nachtminimum ausgewertet werden, wobei die Ganglinien auf die minimal gemessenen Werte hin untersucht werden, die, vorzugsweise fünf, geringsten Werte gemittelt werden und die so identifizierten Wasserbewegungen während der verbrauchsschwachen Nachtstunden auf Leckverluste hinweisen.

Das erfindungsgemäße Messverfahren ist für alle Rohrmaterialien sowie alle Rohrdimensionen tauglich, besitzt eine hohe Messgenauigkeit (V=0,0025 m/s), zeichnet sich durch eine niedrige Messschwelle von weniger als 1 cm/s und eine hohe Reproduzierbarkeit der Messergebnisse aus, ermöglicht eine einfache Montage, insbesondere ohne Bohrungen oder Schnitte in die Rohrleitungen, vermeidet Querschnittsverengungen an den Einbaustellen und gewährleistet eine verschleiß- und wartungsfreie Messung ohne notwendige Zonierung.

Die Sensoren können nebeneinander mit einem Abstand voneinander auf der gleichen Seite des Rohres angeordnet sein oder auf gegenüberliegenden Seiten des Rohres versetzt montiert sein.

Das erfindungsgemäße Verfahren kann insbesondere verwendet werden, um Wasserverluste in einem Trinkwasserrohrleitungsnetz zu überwachen und/oder zu orten. Das Verfahren kann beispielsweise einen Rohrnetzbetreiber bei der Überwachung des Verteilnetzes auf Rohrbrüche und sonstige Leckstellen unterstützen. Bei einer vorteilhaften Ausgestaltung des Verfahrens werden in der zentralen Rechnereinheit die Messdaten der Ganglinien mit dem charakteristischen Nachtminimum ausgewertet, wobei die Ganglinien auf die minimal gemessenen Werte hin untersucht werden, die, vorzugsweise fünf, geringsten Werte gemittelt werden und die so identifizierten Wasserbewegungen während der verbrauchsschwachen Nachtstunden auf Leckverluste hinweisen. Dabei können insbesondere Aussagen zum Netzzustand und/oder seinen Veränderungen erfolgen und/oder eine Quantifizierung der Leckagemengen erfolgen, indem die Messdaten der einzelnen Messeinheiten und/oder davon abgeleitete Daten mit in der Vergangenheit aufgenommenen Messdaten verglichen werden.

Die Übertragung der Messdaten vom Datenübertragungsmodul der einzelnen Messeinheiten an eine zentrale Rechnereinheit erfolgt vorzugsweise über ein öffentliches Mobilfunknetz, beispielsweise GSM. Das Datenübertragungsmodul ist vorzugsweise ein GSM-Modem mit Antenne. Die Lage einer Leckstelle kann besonders vorteilhaft auf einen Teilbereich des Rohrleitungsnetzes örtlich eingegrenzt werden, indem Messdaten benachbarter Messeinheiten gemeinsam ausgewertet werden. Die Messeinheiten sind im Rohrleitungssystem vorzugsweise in einem Abstand von 5 bis 20 Kilometern voneinander angebracht und die Strömungsgeschwindigkeit im Rohr wird permanent gemessen. Dabei wird jede Sekunde ein Messwert gespeichert.

Bei einer vorteilhaften Weiterentwicklung des Verfahrens werden aus den Messdaten der Messeinheiten jeweils der minimal und maximal aufgetretene Flüssigkeitsdurchfluss sowie ein Mittelwert ermittelt. In einer Rechnereinheit an der Messeinheit werden gemäß einer vorteilhaften Ausführungsvariante die Volumenströme berechnet und als komprimierte, mit einem Zeitstempel versehene Datenpakete im SMS-Format an die zentrale Rechnereinheit versandt. Weiterhin können alle Daten-SMS an eine Empfangszentrale geleitet werden oder die zentrale Sammlung und Aufbereitung von Daten und/oder der Abruf von Ereignissen via Internetverbindung erfolgen. Besondere Vorteile ergeben sich aus einer Kombination einer ersten Stufe, umfassend die oben genannte Identifizierung und grobe Ortung eines Flüssigkeitsverlustes im Rohrleitungsnetz, mit einer zweiten Stufe, in welcher eine weitere örtliche Eingrenzung einer Leckage mithilfe einer flächigen Geräuschpegelmessung in dem als potenziellem Leckbereich ausgewiesenen Teil des Rohrleitungsnetzes vorgenommen wird. Weiterhin kann in einer dritten Stufe die Einortung der Leckstelle in dem weitestgehend eingegrenzten Netzbereich mit weiteren Verfahren der Leckortung, vorzugsweise der Korrelation, erfolgen.

Somit kann das erfindungsgemäße Verfahren besonders vorteilhaft in einem dreistufigen Ansatz durchgeführt werden: Die erste Stufe stellt die permanente Verlustüberwachung des Gesamtnetzes durch automatisierte Systeme dar. Hierzu gehören die Behälterauslaufmessungen und eventuell im Verteilnetz installierte Zonenzuflussmessungen. Das derart bestehende Messnetz wird durch die Installation der erfindungsgemäßen Messeinheiten verdichtet. Die so vorgenommene Überwachung liefert einen tagesaktuellen Überblick über den Netzzustand und eventuell auftretende Veränderungen. Gleichzeitig kann dieses Überwachungssystem in Abhängigkeit von der Dichte der Messeinrichtungen Aussagen zum Auftreten einzelner Leckagen, zur Leckgröße und -position mit eingeschränkter Genauigkeit liefern. Das Ergebnis dieser ersten Stufe ist die frühzeitige Identifizierung einer Leckage im Verteilnetz und eine grobe Vorortung der Leckstelle auf einzelne Netzbereiche.

Daran kann sich eine zweite Stufe anschließen. In dem als potenziellem Leckbereich ausgewiesenen Teil des Wasserverteilnetzes können zur weiteren Eingrenzung der Leckage unterstützende Maßnahmen wie die flächige Geräuschpegelmessung vorgenommen werden. Ergebnis der zweiten Stufe ist eine weitere Eingrenzung der Leckposition.

In einer dritten Stufe erfolgt nun die Einortung der Leckstelle in dem weitestgehend eingegrenzten Netzbereich mit herkömmlichen Verfahren der Leckortung, wie beispielsweise der Korrelation. Daran schließt sich die Reparatur der Leckage an. Die sequenzielle Abfolge dieser drei Teilschritte liegt unter anderem in den unterschiedlichen Kosten, die ihre Anwendung verursacht bzw. begründet. Die spezifischen Kosten zur Anwendung der drei Verfahren steigen stark an. Durch die weitestgehende Einschränkung der teuren Verfahren auf relevante Netzbereiche kann der betriebliche Aufwand deutlich gesenkt werden. Daneben ist eine signifikante Beschleunigung der Leckidentifikation möglich. Die Durchflussmessung erfolgt im Ultraschallmessverfahren durch Auswertung der Laufzeitdifferenzen zweier entgegengesetzt durch das Medium laufender Ultraschallsignale. Bei der Installation erfolgt die Anbringung der Sensorköpfe im Durchstrahlmodus benachbart auf der Außenseite des Rohres auf Kämpferhöhe. Die Ultraschalldurchflussmessung lässt sich auf allen in der Trinkwasserversorgung verwendeten Rohrmaterialien, wie Grauguss, Duktilguss, Stahl, Kunststoffe (PE, PEh, PEX, PVC) oder Asbestzement, auch bei außen beschichteten oder innen ausgekleideten Rohren einsetzen. Das Verfahren kann bei Leitungsdimensionen mit Außendurchmessern von 90 mm bis 330 mm verwendet werden, aber auch größere Rohrdimensionen können bei Einsatz entsprechend leistungsstarker Sensorköpfe überwacht werden. Das Verfahren ist besonders geeignet, geringe Fließgeschwindigkeiten zuverlässig zu erkennen. Die Messschwelle des Systems liegt bei unter 2 cm/s. Dies ermöglicht eine hochwertige Überwachung der Nachtdurchflüsse in ausgewählten Messpositionen im Verteilnetz. Bereits geringe Wasserverlustmengen werden angezeigt. Dies ermöglicht die Detektion von Leckagen bereits frühzeitig nach ihrem Entstehen. Eine deutliche Verkürzung der Lecklaufzeit wird ermöglicht. Vorzugsweise wird bei der Ermittlung der Strömungsgeschwindigkeit einmal je Sekunde ein Messwert gespeichert. Der Durchflussmesser ermittelt daraus in frei einstellbaren Messintervallen jeweils den minimal und maximal aufgetretenen Durchfluss sowie einen Mittelwert. Der Betrieb der Messeinheiten kann auf ca. ein bis zwei Stunden täglich beschränkt werden. Als geeignete Messzeit hat sich der Zeitraum zwischen 02.00 Uhr und 05.00 Uhr erwiesen. Die Datenübertragung erfolgt vorzugsweise über das GSM-Netz (Mobilfunk). Die intern errechneten Volumenströme werden in Datenpakete komprimiert und im SMS-Format versandt. Jede SMS enthält bis zu 20 Datenzeilen. Diese sind jeweils mit einem Zeitstempel versehen. Sie enthalten den im eingestellten Messintervall aufgetretenen Minimal- und Maximalwert sowie den Mittelwert. Die Mittelungsintervalle sind von einer Minute bis 60 Minuten frei einstellbar. Die Messeinheit lässt sich auch über die Datenfernübertragung parametrieren. Beispielsweise lässt sich über Ferneinstellung das Messintervall verändern. Die Datenübertragung via SMS ist sehr zuverlässig. Die einzelnen SMS werden vom Provider auch zwischengespeichert, falls die Empfangszentrale durch die Sendungen anderer Einheiten ausgelastet ist. Zur Zeitsynchronisation sendet die Empfangszentrale unabhängig vom übrigen Sendeverkehr an jede Messeinheit täglich eine SMS.

Sämtliche Daten-SMS werden an eine Empfangszentrale geleitet. Alternativ ist die zentrale Sammlung und Aufbereitung von Daten und der Abruf von Ergebnissen via Internetverbindung möglich. In der Empfangszentrale werden die Informationen in einer Datenbank gespeichert. Ein Computerprogramm, welches einen oder mehrere der oben genannten Verfahrensschritte ausführt, ist ebenfalls Gegenstand der Erfindung. Das Computerprogramm ist vorzugsweise auf einem Datenträger gespeichert. Weiterhin ist auch ein Computersystem, auf dem ein erfindungsgemäßes Computerprogramm geladen ist, Gegenstand der Erfindung. Das Computersystem kann dabei die zentrale Rechnereinheit und/oder eine in unmittelbarer Nähe zur Messeinheit befindliche Rechnereinheit sein.

Das Computerprogramm wertet die Daten nach dem oben beschriebenen Verfahren aus und stellt die Ergebnisse graphisch dar. Von Interesse ist dabei insbesondere die Identifizierung des minimal festgestellten Durchflusses an der Messstelle. Deshalb werden die Datensätze systematisch auf Minimalwerte hin untersucht. Ausreißerwerte werden identifiziert und von der Berechnung ausgeschlossen. Das Computerprogramm ermöglicht die detaillierte Auswertung einzelner Messstellen sowohl anhand der errechneten Nachtminima als auch auf Basis der aufgenommen Ausschnitte der Ganglinien. Diese werden als Kurvenschar der drei Messauswertungen (Maximal- und Minimalwert sowie Mittelwert im Messintervall) dargestellt. Daneben ermöglicht das Programm den Vergleich benachbarter Messeinheiten. Die gleichzeitige Darstellung der Messreihen erlaubt eine schnelle Übersicht über die Veränderungen der einzelnen Messpositionen gegeneinander. Zusätzlich lassen sich mehrere Messstellen "bilanziell" zusammenfassen. So entsteht eine Zonenüberwachung.

Die Anzahl der erforderlichen Messstellen hängt von der gewünschten Aussagequalität des Überwachungssystems, der Netzstruktur, insbesondere dem Vermaschungsgrad und der Verteilung der Rohrdimensionen, sowie der Möglichkeit der Ausbildung von starren Abschieberungen (statische Zonentrennung) ab.

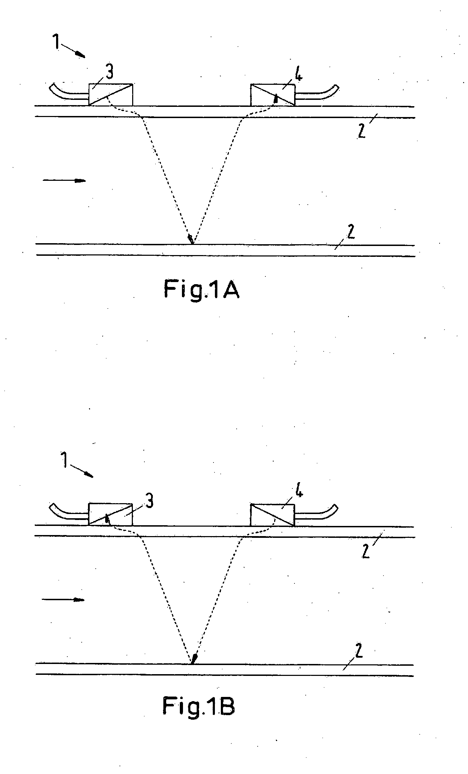

Weitere Vorteile und Einzelheiten des erfindungsgemäßen Verfahrens ergeben sich aus dem anhand der Zeichnungen beschriebenen und die Erfindung nicht einschränkenden Ausführungsbeispiel. Dabei zeigt Fig. 1A, B die Installation von zwei Sensoren an der Außenseite eines Rohres.

Gemäß Fig. 1A, B wird an einer ausgewählten Stelle eines Rohres 2 eines Rohrleitungsnetzes eine Messeinheit 1 positioniert. Dabei besteht eine Messeinheit 1 jeweils aus einem ersten Sensor 3 sowie einem zweiten Sensor 4, welche bei dem dargestellten Ausführungsbeispiel entlang der Rohrachse nebeneinander beabstandet auf der Außenseite des Rohres 2 angebracht sind. Beide Sensoren arbeiten entweder als Sender oder als Empfänger. Der Durchfluss des Wassers durch die Rohrleitung 2 wird mit Hilfe des Ultraschallmessverfahrens bestimmt. Dabei werden Ultraschallsignale von dem Sensor 3 gemäß Fig. 1 A ausgesandt, welche auf der gegenüberliegenden Seite des Rohres reflektiert und von dem zweiten Sensor 4 wieder empfangen werden. Dieser erste Ultraschallimpuls wird in Strömungsrichtung, welche durch den Pfeil angedeutet ist, durch die Flüssigkeit gesendet.

Gemäß Fig. 1 B wird ein zweiter Ultraschallimpuls entgegen der Strömungsrichtung von dem zweiten Sensor 4 abgesendet und nach Reflektion an der gegenüberliegenden Rohrinnenwandung von dem ersten Sensor 3 detektiert. Da das Medium, in dem sich der Ultraschall ausbreitet, fließt, ist die Laufzeit der Schallsignale, die das Medium in Flussrichtung durchlaufen, kürzer als die Laufzeit der Signale, welche es entgegen der Flussrichtung durchlaufen. Der Laufzeitunterschied Δt wird gemessen und erlaubt die Bestimmung der mittleren Strömungsgeschwindigkeit auf dem vom Schall durchlaufenen Pfad. Durch eine Profilkorrektur kann das Flächenmittel der Strömungsgeschwindigkeit errechnet werden, welches zu dem Volumenfluss proportional ist. Der Abstand der Sensoren kann beispielsweise fünf Zentimeter betragen. Optional können minimale und maximale Grenzwerte für den Durchfluss festgelegt werden, bei deren Überschreitung bzw. Unterschreitung ein Alarmsignal automatisch generiert wird. Die in einem der Messeinheit zugeordneten Durchflussmessgerät errechneten Volumenströme werden mit Hilfe eines GSM-Moduls an eine zentrale Rechnereinheit übertragen. Den Messeinheiten kann ein Schaltschrank zugeordnet sein, worin sich mindestens das GSM-Modul befindet. Weiterhin kann in diesem Schaltschrank eine SPS-Steuereinheit (Speicherprogrammierbare Steuerung) mit digitalen Ein- und Ausgangsklemmen sowie analoger Eingangsklemme, ein Betriebswahlschalter (ein, aus, Inbetriebnahme), ein Netzteil, ein Durchflussmessgerät, ein Netzanschluss, USV (eine unterbrechungsfreie Stromversorgung) sowie ein Akkupack zur Überbrückung spannungsfreier Zeiten untergebracht sein. Als Alternative zum Netzanschluss kann die Energieversorgung auch durch ein Solarpanel (Solarmodul, Photovoltaikmodul oder Solargenerator) oder über eine Nachtspeisung durch die Straßenbeleuchtung erfolgen. Bei der letztgenannten Möglichkeit werden Akkus nachts über einen Anschluss an eine Straßenlaterne aufgeladen.

### Bezugszeichenliste

- 1: Messeinheit
- 2: Rohr
- 3: erster Sensor
- 4: zweiter Sensor

## Patentansprüche

1. Verfahren zur Überwachung und/oder Ortung von Wasserverlusten in einem Wasserrohrleitungsnetz mit mehreren Ganglinien, umfassend mindestens folgende Schritte:
- Positionierung von Messeinheiten (1) an ausgewählten Stellen des Rohrleitungsnetzes, wobei eine Messeinheit (1) jeweils aus zwei gleichzeitig als Sender und Empfänger arbeitenden Sensoren (3, 4) besteht, welche entlang der Rohrachse auf der Außenseite, vorzugsweise auf Kämpferhöhe, eines Rohres (2) angebracht sind, **dadurch gekennzeichnet, dass** das Verfahren mindestens die weiteren folgenden Schritte umfasst:
- Messung der Strömungsgeschwindigkeit der Flüssigkeit im Rohr (2) mit Hilfe des Ultraschallmessverfahrens, wobei ein erster Ultraschallimpuls durch die Flüssigkeit in Strömungsrichtung sowie ein zweiter Ultraschallimpuls entgegen der Strömungsrichtung gesendet wird, die Sensoren (3, 4) abwechselnd als Sender und Empfänger arbeiten und die Strömungsgeschwindigkeit aus der Laufzeitdifferenz Δt der Schallsignale in Strömungsrichtung und der Schallsignale entgegen der Strömungsrichtung bestimmt wird,
- Übertragung der Messdaten an eine Datenbank einer zentralen Rechnereinheit mit Hilfe eines an die jeweilige Messeinheit (1) angeschlossenen Datenübertragungsmoduls und,
- Auswertung der Messdaten in der zentralen Rechnereinheit, indem die Messdaten der Ganglinien mit dem charakteristischen Nachtminimum ausgewertet werden, wobei die Ganglinien auf die minimal gemessenen Werten hin untersucht werden, die, vorzugsweise fünf, geringsten Werte gemittelt werden und die so identifizierten Wasserbewegungen während der verbrauchsschwachen Nachtstunden auf Leckverluste hinweisen.

2. Verfahren nach Anspruch 1, **dadurch gekennzeichnet, dass** Aussagen zum Netzzustand und/oder seine Veränderungen erfolgen und/oder eine Quantifizierung der Leckagemengen erfolgt, indem die Messdaten der einzelnen Messeinheiten und/oder davon abgeleitete Daten mit in der Vergangenheit aufgenommenen Messdaten verglichen werden.

3. Verfahren nach Anspruch 2, **dadurch gekennzeichnet, dass** die Übertragung der Messdaten vom Datenübertragungsmodul an eine zentrale Rechnereinheit über ein öffentliches Mobilfunknetz (GSM) erfolgt.

4. Verfahren nach Anspruch 3, **dadurch gekennzeichnet, dass** die Lage der Leckstelle auf einen Teilbereich des Rohrleitungsnetzes örtlich eingegrenzt wird, indem Messdaten benachbarter Messeinheiten gemeinsam ausgewertet werden.

5. Verfahren nach Anspruch 4, **dadurch gekennzeichnet, dass** Messeinheiten in einem Abstand von 5 bis 20 km im Rohrleitungssystem angebracht sind.

6. Verfahren nach Anspruch 5, **dadurch gekennzeichnet, dass** die Strömungsgeschwindigkeit im Rohr permanent gemessen wird.

7. Verfahren nach Anspruch 6, **dadurch gekennzeichnet, dass** aus den Messdaten der Messeinheiten jeweils der minimal und maximal aufgetretene Flüssigkeitsdurchfluss sowie ein Mittelwert ermittelt werden.

8. Verfahren nach Anspruch 7, **dadurch gekennzeichnet, dass** in einer Rechnereinheit an der Messeinheit die Volumenströme berechnet und als komprimierte mit einem Zeitstempel versehene Datenpakete im SMS-Format an die zentrale Rechnereinheit versandt werden.

9. Verfahren nach Anspruch 8, **dadurch gekennzeichnet, dass** alle Daten-SMS an eine Empfangszentrale geleitet werden oder dass die zentrale Sammlung und Aufbereitung von Daten und/oder der Abruf von Ergebnissen via Internet-Verbindung erfolgt.

10. Verfahren nach Anspruch 9, **dadurch gekennzeichnet, dass** nach der Identifizierung und groben Ortung eines Flüssigkeitsverlusts im Rohrleitungsnetz in einer zweiten Stufe eine weitere örtliche Eingrenzung einer Leckage mit Hilfe einer flächigen Geräuschpegelmessung in dem als potenziellem Leckbereich ausgewiesenen Teil des Rohrleitungsnetzes vorgenommen wird.

11. Verfahren nach Anspruch 10, **dadurch gekennzeichnet, dass** in einer dritten Stufe die Einortung der Leckstelle in dem weitestgehend eingegrenzten Netzbereich mit weiteren Verfahren der Leckortung, vorzugsweise der Korrelation, erfolgt.

12. Computerprogramm zur Ausführung eines Verfahrens gemäß einem der Ansprüche 1 bis 11.

13. Datenträger mit einem Computerprogramm nach Anspruch 12.

14. Computersystem, auf dem ein Computerprogramm nach Anspruch 12 geladen ist.

## Claims

1. A method for the monitoring and/or location of water losses in a water pipeline network with a plurality of hydrographs, comprising at least the following steps:
- positioning of measuring units (1) at selected points of the pipeline network, wherein a measuring unit (1) consists of two sensors (3, 4) operating simultaneously as transmitter and receiver, which are mounted along the pipe axis on the outer surface of a pipe (2), preferably on the bore centre line, **characterised in that** the method comprises at least the further following steps:
- measurement of the flow velocity of the fluid in the pipe (2) with the aid of the ultrasound measurement method, wherein a first ultrasound pulse is transmitted through the fluid in the flow direction, and a second ultrasound pulse is transmitted against the flow direction, the sensors (3, 4) operate alternately as transmitter and receiver and the flow velocity is determined from the time difference Δt between the sound signals in the flow direction and the sound signals against the flow direction,
- transfer of the measured data to a database of a central computer unit with the aid of a data transfer module attached onto the measuring unit (1) in question, and
- evaluation of the measured data in the central computer unit, **in that** the measured data of the hydrographs with the characteristic night minimum are evaluated, wherein the hydrographs are investigated for the minimum measured values, the, preferably five, lowest values are determined, and the water movements thus identified during the low consumption night hours indicate leakage losses.

2. The method in accordance with Claim 1, **characterised in that** statements are made concerning the state of the network and/or its variations, and/or a quantification of the leakage quantities is undertaken, **in that** the data measured by the individual measuring units, and/or data derived from these, are compared with measured data recorded in the past.

3. The method in accordance with Claim 2, **characterised in that** the transfer of the measured data from the data transfer module to a central computer unit takes place via a public mobile wireless network (GSM).

4. The method in accordance with Claim 3, **characterised in that** the position of the leak is locally isolated to a part of the pipeline network, **in that** data measured by adjacent measuring units are jointly evaluated.

5. The method in accordance with Claim 4, **characterised in that** measuring units are fitted at separation distances of 5 to 20 km in the pipeline system.

6. The method in accordance with Claim 5, **characterised in that** the flow velocity in the pipe is permanently measured.

7. The method in accordance with Claim 6, **characterised in that** the minimum and maximum fluid flow rates occurring are determined from the data measured by each of the measuring units, as is an average value.

8. The method in accordance with Claim 7, **characterised in that** the volumetric flows are calculated in a computer unit on the measuring unit, and are transmitted to the central computer unit as compressed data packages in SMS format provided with a timestamp.

9. The method in accordance with Claim 8, **characterised in that** all SMS data are routed to a reception centre, or **in that** the central collection and preparation of data and/or the retrieval of results takes place via an Internet connection.

10. The method in accordance with Claim 9, **characterised in that** after the identification and preliminary location of a fluid loss in the pipeline network a further local isolation of a leakage is undertaken in a second stage with the aid of a two-dimensional noise level measurement in the part of the pipeline network identified as a potential leakage region.

11. The method in accordance with Claim 10, **characterised in that** in a third stage the localisation of the leak takes place in the region of the network that has been isolated as far as possible, using other methods of leakage locat-ion, preferably correlation methods.

12. A computer program for purposes of executing a method in accordance with one of the Claims 1 to 11.

13. A data medium with a computer program in accordance with Claim 12.

14. A computer system, on which is loaded a computer program in accordance with Claim 12.

## Revendications

1. Procédé pour la surveillance et/ou la localisation de pertes d'eau dans un réseau de conduites d'eau avec plusieurs régimes hydrographiques, comprenant au moins les étapes suivantes :
- positionnement d'unités de mesure (1) à des emplacements choisis du réseau de conduites d'eau, une unité de mesure (1) se composant respectivement de deux capteurs (3, 4) travaillants simultanément en tant qu'émetteur et récepteur, lesquels sont mis en place le long de l'axe de conduite, sur le côté extérieur, de préférence à hauteur de naissance d'une conduite (2), **caractérisé en ce que** le procédé comprend au moins les autres étapes suivantes :
- mesure de la vitesse d'écoulement du liquide dans la conduite (2) à l'aide du procédé par ultrasons, une première impulsion ultrasonore étant envoyée à travers le liquide en direction d'écoulement ainsi qu'une deuxième impulsion ultrasonore étant envoyée en sens contraire à la direction d'écoulement, les capteurs (3, 4) travaillant tour à tour en tant qu'émetteur et récepteur et la vitesse d'écoulement étant déterminée à partir de la différence de temps de propagation Δt entre les signaux sonores en direction d'écoulement et les signaux sonores en sens contraire à la direction d'écoulement,
- transfert des données de mesure à une base de données d'une unité informatique centrale à l'aide d'un module de transfert de données raccordé à l'unité de mesure (1) respective, et
- évaluation des données de mesure dans l'unité informatique centrale **en ce que** les données de mesure des régimes hydrographiques sont évaluées avec le minimum nocturne caractéristique, les régimes hydrographiques étant analysés concernant les valeurs minimales mesurées, la moyenne des valeurs les plus faibles, de préférence au nombre de cinq, étant calculée et les mouvements d'eau ainsi identifiés pendant les heures nocturnes à faible consommation indiquant des fuites d'eau.

2. Procédé selon la revendication 1, **caractérisé en ce qu'**il s'en suit des informations sur l'état du réseau et/ou les modifications de celui-ci et/ou une quantification des quantités de fuite **en ce que** les données de mesure des unités de mesure individuelles et/ou des données dérivées de celles-ci sont comparées avec des données de mesure relevées par le passé.

3. Procédé selon la revendication 2, **caractérisé en ce que** le transfert des données de mesure par le module de transfert de données à l'attention d'une unité informatique centrale s'effectue via un réseau public de téléphonie mobile (GSM).

4. Procédé selon la revendication 3, **caractérisé en ce que** la situation de l'emplacement de la fuite est délimitée localement à une zone partielle du réseau de conduites d'eau **en ce que** des données de mesure d'unités de mesure voisines sont évaluées en commun.

5. Procédé selon la revendication 4, **caractérisé en ce que** des unités de mesure sont mises en place dans le système de conduites d'eau avec un espacement de 5 à 20 km.

6. Procédé selon la revendication 5, **caractérisé en ce que** la vitesse d'écoulement dans la conduite est mesurée en permanence.

7. Procédé selon la revendication 6, **caractérisé en ce que** l'on détermine, à partir des données de mesure des unités de mesure, l'écoulement de liquide respectivement minimal et maximal ainsi qu'une valeur moyenne.

8. Procédé selon la revendication 7, **caractérisé en ce que** les débits volumiques sont calculés dans une unité informatique au niveau de l'unité de mesure et sont envoyés, en tant que paquets de données comprimées munis d'un cachet de datation, au format SMS, à l'attention de l'unité informatique centrale.

9. Procédé selon la revendication 8, **caractérisé en ce que** tous les SMS de données sont transmis à une centrale de réception ou bien **en ce que** la collecte centrale et la préparation de données et/ou l'interrogation de résultats s'effectuent via Internet.

10. Procédé selon la revendication 9, **caractérisé en ce que**, après l'indentification et la localisation grossière d'une perte de liquide dans le réseau de conduites d'eau, au cours d'une deuxième étape, on procède à une délimitation locale de plus d'une fuite à l'aide d'une mesure plane du niveau de bruit dans la partie du réseau de conduites d'eau s'étant avérée être la zone potentielle de fuites.

11. Procédé selon la revendication 10, **caractérisé en ce que**, au cours d'une troisième étape, la localisation de l'emplacement de fuite dans la zone de réseau délimitée dans une large mesure s'effectue avec d'autres procédés de localisation de fuites, de préférence la corrélation.

12. Programme informatique pour la mise en oeuvre d'un procédé selon l'une des revendications 1 à 11.

13. Support de données avec un programme informatique selon la revendication 12.

14. Système informatique sur lequel est chargé un programme informatique selon la revendication 12.
